Europäisches Patentamt

European Patent Office

Office européen des brevets

(19)

(11) Publication number: **0 073 864**
A1

(12) **EUROPEAN PATENT APPLICATION**

(21) Application number: 81304101.9

(22) Date of filing: 08.09.81

(51) Int. Cl.³: **C 04 B 11/00**
**B 02 C 19/12, B 03 B 9/06**

(43) Date of publication of application:
16.03.83 Bulletin 83/11

(84) Designated Contracting States:
AT BE CH DE FR IT LI LU NL SE

(71) Applicant: N.V. GYPROC BENELUX, naamloze
vennootschap
Merksemsebaan 270
B-2110 Wijnegem(BE)

(72) Inventor: Coppens, Frans Jozef
1 Olmenlaan
B-2508 Kessel(BE)

(74) Representative: Williams, Trevor John et al,
J.A. KEMP & CO. 14 South Square Gray's Inn
London WC1R 5EU(GB)

(54) A process of reclaiming gypsum from plasterboard.

(57) A process of reclaiming gypsum from plasterboard in which the plasterboard is broken up and then screened to obtain a fine fraction largely comprised of gypsum. The plasterboard is differentially ground in a hammermill having an opening discharge port to form a mixture of small sized particles of gypsum and substantially larger pieces of paper which is subsequently screened to obtain a fraction consisting predominantly of gypsum.

EP 0 073 864 A1

Croydon Printing Company Ltd.

-1-

## DESCRIPTION

### A PROCESS OF RECLAIMING GYPSUM FROM PLASTERBOARD.

The present invention relates to a process for use in the reclamation of gypsum from rejected plasterboard.

In order to produce gypsum from plasterboard, it is necessary to separate the paperboard from the gypsum which is contained within the plasterboard. It is also possible to re-use the gypsum and the paperboard together, provided the paperboard is reduced to pulp, to an extent where its re-introduction can occur without disturbing the process.

Existing processes can be classified according to these two principles. In one process, the plasterboard is dumped in a pulper, where the paperboard and the gypsum core are disintegrated to form a slurry. The slurry is then allowed to drain out and the remaining cake is added, in a small proportion,to the crude gypsum. In this process, the reclaimed material goes through the complete process of drying, grinding and calcination of the gypsum.

In a typical dry process, the plasterboard is taken and subject to crude breaking, e.g. by a tractor and rotavator, working on a large area of reject plasterboard, which is then screened. In this process, the reclamation efficiency is relatively low (less than 80%) and the separation of paper is very imperfect.

The present invention is directed at an improvement of the process, whereby:

-2-

a higher proportion of gypsum is reclaimed than
in prior reclamation processes;

the gypsum is ground to a particle size of which
typically 20% will pass through a 100 mesh (150 µm);

the reclaimed material has a free water content
normally below 10% by weight although it may have an
occasional maximum of 15%;

only a very small proportion of paper is entrained
with the reclaimed gypsum;

the reclaimed gypsum can be introduced in the process
just before the calcination stage, thereby avoiding
drying and grinding, as well as several handling
operations.

The reclamation process is independent of prevailing
weather conditions.

     According to the present invention there is
provided a process of reclaiming gypsum from plasterboard
in which the plasterboard is broken up and then screened
to obtain a fine fraction largely comprised of gypsum
characterized in that the plasterboard is differentially
ground in a hammermill to form a mixture of small sized
particles of gypsum and substantially larger pieces of
paper which is subsequently screened to obtain a fraction
consisting predominantly of gypsum.

     The grinding takes place in a hammermill,
preferably of a type with a vertical shaft, equipped
with pre-breaker hammers in the feed opening, and several
sets of hammers mounted one above the other on the
vertical shaft.

     The number of hammers, their positions and
sizes can be modified in a particular hammermill to suit
the process. This type of hammermill is exemplified

-3-

by the machines manufactured by Newell Dunford Engineering Ltd of Misterton, Doncaster, England and sold under the trade name Tollemache. Such a hammermill, especially when provided with an open discharge port, grinds differentially. The gypsum being friable, is ground to a small size and the paperboard remains as pieces which are many orders of magnitude larger in size than the particles of gypsum.

The product from the hammermill is fed to a screen, the mesh of which is chosen such that the finely ground gypsum passes through the screen, and most of the paperboard reports as oversize. Both screening fractions are substantially free of the other component.

The gypsum so treated is suitable to be fed directly into a calciner. Preferably, the reclaimed gypsum should be fed together with fresh material in a proportion of about 1/10 into a calciner for subsequent production into new plasterboard.

In a typical installation the product from the hammermill outlet was screened through a screen having a 5 mm dimension. With such a screen 95% of the gypsum of the plasterboard fed to the hammermill was recovered contaminated by less than 3% paper. The free moisture content of the reclaimed material was between 0 and 15% depending upon the humidity of the waste plasterboard as fed to the hammermill. The product of the hammer mill comprised gypsum 60% of which had a particle size less than 250 μm and 95% of which had a particle size less than 1 mm, and paper 80% of which had a dimension greater than 5 mm and 50% of which had a dimension greater than 10 mm.

-4-

CLAIMS

1. A process of reclaiming gypsum from plasterboard in which the plasterboard is broken up and then screened to obtain a fine fraction largely comprised of gypsum characterized in that the plasterboard is differentially ground in a hammermill to form a mixture of small sized particles of gypsum and substantially larger pieces of paper which is subsequently screened to obtain a fraction consisting predominantly of gypsum.

2. A process according to claim 1, characterized in that the hammermill has an open discharge port.

3. A process according to claim 1 or 2, characterized in that the hammermill is a vertical shaft mill.

4. A process according to claim 3, characterized in that the mill has pre-breaker hammers in its feed opening and several sets of hammers mounted above each other on the shaft.

5. A process as claimed in any preceding claim, characterized in that the hammermill product is screened at 5 mm size.

6. A process as claimed in any preceding claim, characterized in that separation is such that 95% of the gypsum is recovered from the plasterboard feed with the gypsum recovered being contaminated by less than 3% paper.

7. A process as claimed in any preceding claim, characterized in that the free moisture content of the reclaimed material is between 0 and 15% by weight.

-5-

8. A process according to any preceding claim, characterized in that the product from the hammermill outlet comprises gypsum 60% of which has a particle dimension below 250 μm and paper 50% of which has a dimension greater than 10 mm.

9. A process according to any preceding claim, characterized in that the product from the hammermill outlet comprises gypsum 95% of which has a particle dimension below 1 mm and paper 80% of which has a dimension greater than 5 mm.

## DOCUMENTS CONSIDERED TO BE RELEVANT

| Category | Citation of document with indication, where appropriate, of relevant passages | Relevant to claim | CLASSIFICATION OF THE APPLICATION (Int Cl ³) |
|---|---|---|---|
| A | DD-B- 132 236 (PECHT) *The whole document* | 1 | C 04 B 11/00 B 02 C 19/12 B 03 B 9/06 |
| A | DD-B- 144 906 (KIRSTEN et al.) *The whole document* | 1 | |
| A | FR-A-1 338 702 (VEREINIGTE BAUSTOFFWERKE BODENWERDER) | | |

TECHNICAL FIELDS
SEARCHED (Int. Cl ³)

B 07 B
B 03 B
C 04 B
B 09 B
B 02 C
C 01 F
E 04 C
D 21 B
B 28 B

The present search report has been drawn up for all claims

| Place of search | Date of completion of the search | Examiner |
|---|---|---|
| THE HAGUE | 28-04-1982 | LAVAL J.C.A |